# NEUE EUROPÄISCHE PATENTSCHRIFT

(11) **EP 0 885 467 B2**
(45) Veröffentlichungstag und Bekanntmachung des Hinweises auf die Entscheidung über den Einspruch: **07.03.2007**
(45) Hinweis auf die Patenterteilung: 27.06.2001
(21) Anmeldenummer: 97914135.5
(22) Anmeldetag: 11.02.1997
(51) Int. Cl.: H01M 8/04

(54) **ANLAGE ZUR NUTZUNG DER IN DEN ABGASEN EINER NIEDERTEMPERATUR-BRENNSTOFFZELLE ENTHALTENEN ENTHALPIE**
PLANT FOR UTILISING THE ENTHALPY CONTAINED IN THE WASTE GASES OF A LOW-TEMPERATURE FUEL CELL
INSTALLATION POUR L'UTILISATION DE L'ENTHALPIE CONTENUE DANS LES EFFLUENTS GAZEUX D'UNE PILE A COMBUSTIBLE POUR BASSES TEMPERATURES

(30) Priorität: 06.03.1996 DE 19608738
(43) Veröffentlichungstag der Anmeldung: 23.12.1998
(73) Patentinhaber: SIEMENS AKTIENGESELLSCHAFT, 80333 München (DE)
(72) Erfinder: NÖLSCHER, Christoph, D-90419 Nürnberg (DE); KIRCHER, Roland, D-91086 Aurachtal (DE)
(86) Internationale Anmeldenummer: PCT/DE1997/000249
(87) Internationale Veröffentlichungsnummer: WO 1997/033330

(56) Entgegenhaltungen:
- EP-A- 0 184 541
- EP-A- 0 568 822
- WO-A-89/10010
- WO-A-95/06842
- US-A- 3 172 784
- US-A- 5 345 786
- JOURNAL OF POWER SOURCES, Bd. 49, Nr. 1/03, 1.April 1994, Seiten 129-142, XP000540739 SHOESMITH J P ET AL: "STATUS OF SOLID POLYMER FUEL CELL SYSTEM DEVELOPMENT"
- JOURNAL OF THE ELECTROCHEMICAL SOCIETY, Bd. 136, Nr. 2, 1.Februar 1989, Seiten 41C-48C, XP000174580 SUPRAMANIAM SRINIVASAN: "FUEL CELLS FOR EXTRATERRESTRIAL AND TERRESTRIAL APPLICATIONS"
- PROCEEDINGS OF THE 25TH INTERSOCIETY ENERGY CONVERSION ENGINEERING CONFERENCE, RENO, AUG. 12 - 17, 1990, Bd. 3, 12.August 1990, NELSON P A;SCHERTZ W W; TILL R H, Seiten 165-169, XP000215923 YAMAZAKI Y: "RESEARCH AND DEVELOPMENT PROJECT OF FUEL CELLS IN NEDO, JAPAN"
- PATENT ABSTRACTS OF JAPAN vol. 016, no. 389 (E-1250), 19.August 1992 & JP 04 126369 A (TOKYO GAS CO LTD), 27.April 1992,
- PATENT ABSTRACTS OF JAPAN vol. 007, no. 107 (E-174), 11.Mai 1983 & JP 58 028177 A (TOKYO SHIBAURA DENKI KK), 19.Februar 1983,
- JOURNAL OF POWER SOURCES, Bd. 37, Nr. 1 / 02, 1.Januar 1992, Seiten 81-99, XP000258149 KUNIO SHIBATA: "THE TOKYO ELECTRIC POWER COMPANY (TEPCO) FUEL CELL EVALUATION PROGRAM"
- PATENT ABSTRACTS OF JAPAN vol. 017, no. 411 (E-1406), 30.Juli 1993 & JP 05 082150 A (NIPPON TELEGR & TELEPH CORP), 2.April 1993, & CHEMICAL ABSTRACTS, vol. 119, no. 4, 26.Juli 1993 Columbus, Ohio, US; abstract no. 31535,
- PATENT ABSTRACTS OF JAPAN vol. 016, no. 230 (E-1208), 27.Mai 1992 & JP 04 043567 A (TOSHIBA CORP), 13.Februar 1992,
- PATENT ABSTRACTS OF JAPAN vol. 095, no. 011, 26.Dezember 1995 & JP 07 220745 A (SANYO ELECTRIC CO LTD), 18.August 1995,
- HLH, Band 46 (1995), Nr. 11, S.562-567
- Firmenschrift Schiedel: Zeitgemaess die Architektur, umweltfreundlich das Heizsystem, zukunftsweisend die Abgasanlage: Schiedel Compact. Stand 3/95

## Beschreibung

Die Erfindung betrifft eine Niedertemperatur-Brennstoffzellenanlage mit Kraft-Wärme-Kopplung.

Aus der DE-PS-42 34 151 ist für Hochtemperatur-Brennstoffzellen bekannt, daß über Wärmeaustauscher die Wärme aus den Abgasen des Brennstoffzellenmoduls über normale Durchlauferhitzer nutzbar ist. Aus der DE-PS-4032993 ist bekannt, daß das Anodenabgas eines Brennstoffzellenmoduls, das u.a. auch ein Niedertemperatur-Brennstoffzellenmodul sein kann, zur Verbrennung genutzt werden kann. Bei der in diesem Stand der Technik enthaltenen Ausführungsform mit Hochtemperatur-Brennstoffzellen ist vorgesehen, daß die heißen Abgase aus den Hochtemperatur-Brennstoffzellen zur Vorwärmung der noch nicht erwärmten, stark H₂-haltigen Brennstoffe eingesetzt werden. Bislang ist jedoch kein Verfahren und keine Anlage zur Durchführung eines Verfahrens offenbart, bei dem die in den Abgasen von Niedertemperatur-Brennstoffzellen enthaltene Enthalpie zur Erhöhung des Gesamtnutzungsgrads einer Energieversorgungsanlage ausgenutzt wird.

Aufgabe der vorliegenden Erfindung ist es daher, eine Anlage zur Durchführung eines Verfahrens bereitzustellen, bei der die in den Abgasen eines Niedertemperatur-Brennstoffzellenmoduls enthaltene Enthalpie oder Kondensationsenergie zur Erhöhung des Gesamtwirkungsgrades des Energiewandlungssystems beiträgt.

Der Erfindung liegt die Erkenntnis zugrunde, daß die in den Abgasen einer Niedertemperatur-Brennstoffzelle enthaltene Kondensationsenergie erheblich sein kann, insbesondere wenn sie bei niedrigem Druck betrieben wird und im Gesamtsystem einer Energieversorgungsanlage genutzt werden kann. Insbesöndere liegt die Erkenntnis zugrunde, daß die Kombination von zwei Wärmetauschern im Anschluß an ein Niedertemperatur-Brennstoffzellenmodul -einmal einem Wärmeaustauscher, der die im Kühlmedium gespeicherte Wärme nutzbar macht und zum anderen einem Wärmeaustauscher, der die in den Abgasen enthaltene Enthalpie nutzbar macht- die Wärmeleistung und damit den thermischen Nutzungsgrad des Niedertemperatur-Brennstoffzellenmoduls so erhöht, daß ein Gesamtnutzungsgrad des Brennstoffs H₂ von > 100% bezogen auf H_{U} von H₂(unterer Heizwert "H_{U}") erreicht werden kann.

Gegenstand der Erfindung ist eine Niedertemperatur-Brennstoffzellenanlage mit Kraft-Wärme-Kopplung, bei der das Abgas an einen Wärmetauscher, der einen Kondensator umfaßt angeschlossen ist, wobei Leitungen vorgesehen sind, um das zweite Abgas, also das Abgas das aus dem Wärmetauscher oder Kondensator austritt, teilweise oder ganz ins Innere eines zu versorgenden Hauses zu leiten.

Weitere vorteilhafte Ausgestaltungen der Erfindung ergeben sich aus der Beschreibung und den beiden Figuren.

Der Wärmetauscher der die Enthalpie des Abgases nutzbar macht, umfaßt einen Kondensator. Die sonstige Ausgestaltung des Wärmeaustauschers soll aber den Umfang der Erfindung in keiner Weise beschränken, weil auch ein Energiewandler, die die Enthalpie des Abgases in andere nutzbare Energie umsetzen hier erfindungsgemäß eingesetzt werden können.

Als Brennstoffzellen der Niedertemperatur-Brennstoffzellenanlage können alle Arten eingesetzt werden, deren Betriebstemperatur unterhalb der der MCFC (Karbonatschmelzen-Brennstoffzelle: Betriebstemp. ca. 600°C) liegt. Exemplarisch genannt seien dabei die PAFC (Phosphorsaure Brennstoffzelle: Betriebstemp. ca. 150°C - 250°C); DMFC (Direkt-Methanol-Brennstoffzelle: Betriebstemp. ca. 80°C - 150°C; PEM (Membran-Brennstoffzelle: Betriebstemp. 50°C - 80°C) sowie die AFC (Alkalische Brennstoffzelle: Betriebstemp. 60°C - 90°C).

Besonders bevorzugt kommt die Polymer-Membran-(PEM) Brennstoffzelle zum Einsatz. Unter Polymer-Membran-Brennstoffzelle versteht man die PEM-Brennstoffzelle, wobei PEM für Polymer-Elektrolyt-Membran oder Proton-Exchange-Membrane steht. Daneben sind häufig auch noch die Bezeichnungen SPE-(Solid Polymer Electrolyte;); SPFC solid polymer fuel cell; PEFC polymer electrolyte fuel cell und IEM-(Ion Exchange Membran)-Brennstoffzelle zu finden. Es handelt sich dabei um Brennstoffzellen mit makromolekularem Membran-Elektrolyten.

Besonders vorteilhaft ist auch eine Anlage, bei der zusätzlich zur Nutzbarmachung der Abgas-Enthalpie auch die in dem verbrauchten und erwärmten Kühlmedium gespeicherte Energie über einen Wärmeaustauscher nutzbar gemacht wird. Besonders gut daran ist, daß sowohl der Wärmeaustauscher für das Kühlmedium, als auch der Wärmeaustauscher für das Abgas platzsparend in einem einzigen Aggregat integriert werden können. Bei dieser Ausführungsform ist es besonders vorteilhaft, wenn das Kühlmedium im Kreis geführt werden kann, d.h. wenn es nach Abkühlung und Regeneration wieder dem Brennstoffzellenmodul zugeführt wird.

Vorteilhaft ist auch eine Anlage mit einem PEM-Brennstoffzellenmodul, bei der die Enthalpie aus den Abgasen des Brennstoffzellenmoduls in einem Kondensator -einerseits in nutzbare Energie (beisp. Wärmeenergie) umgewandelt wird und -andererseits das auskondensierte Produkt der Brennstoffzellenreaktion, also Wasser, wieder zur Befeuchtung in das PEM-Brennstoff-zellenmodul zurückgeleitet wird.

Bei dieser Ausführungsform kann dabei das flüssig anfallende Produktwasser über extra Leitungen in die Zuleitung für die Reaktanden, im Regelfall die Reaktionsgase, eingespeist werden. Es dient dann zur Befeuchtung der Reaktionsgase oder auch zur Befeuchtung der Membran. Desweiteren kann das aus dem Kondensator erhaltene Wasser auch sonstwie nutzbar gemacht werden (beisp. Nutzwasser des Hauses).

Bei dem Verfahren in der Anlage kann entweder das gesamte Abgas, also Anoden- und Kathodenabgas zusammen, in den Wärmetauscher eingeleitet werden oder nur ein Abgas, also entweder Anoden- oder Kathodenabgas alleine.

Das Verfahren in der Anlage wird bevorzugt bei einer Betriebstemperatur des Brennstoffzellenmoduls zwischen 30°C und 150°C betrieben. Besonders bevorzugt sind die Temperaturbereiche zwischen 50°C und 100°C und insbesondere bevorzugt sind Temperaturbereiche zwischen 45°C und 80°C oder eine Betriebstemperatur von ca. 70°C.

Vorteilhaft ist es auch, wenn bei dem erfindungsgemäßen Verfahren die Restwärme des Abgases, nachdem es den Kondensator verlassen hat, noch zu Heizzwecken genutzt wird. Insbesondere ist es möglich, zumindest einen Teil des aus dem Wärmeaustauscher austretenden Abgases direkt in die Raumluft des zu heizenden Gebäudes einzuspeisen. Ebensogut kann das aus dem Wärmeaustauscher oder Kondensator austretende Abgas aber auch über extra dafür vorgesehene Leitungen in einen weiteren Wärmetauscher eingeleitet werden. Dabei kann es zur Erwärmung von Frischwasser dienen.

"Brennstoffzellenmodul" ist die Bezeichnung für ein Aggregat, das den eigentlichen elektrochemischen Wandler, die dazugehörigen Stellglieder und Geber und den dazugehörigen Befeuchter umfaßt. Als " Brennstoffzellenanlage" wird eine Anlage bezeichnet, die das Modul und die dazugehörige Anlagenperipherie umfaßt. Durch die Wahl des Verbs "umfassen"soll dabei ausgedrückt werden, daß durch beide Bezeichnungen (...-modul und...-anlage) die Aggregate nicht auf diese Merkmale beschränkt sind, sondern auch noch mehr und andere Bestandteile haben können.

Als Brennstoffzellen kommen beim erfindungsgemäßen Verfahren und der Anlage dazu, wie gesagt, alle Niedertemperatur-Brennstoffzellen in Frage. Bevorzugt handelt es sich um die PEM-Brennstoffzelle. Die in den Brennstoffzellen umgesetzten Reaktanden unterliegen keinerlei Beschränkung im Sinne der Erfindung, es handelt sich dabei um alle Gase und Flüssigkeiten, die in Brennstoffzellen als Oxydans oder Brennstoff wirken können. Beispielhaft seien genannt Luft, Sauerstoff und beliebige Mischungen aus diesen Komponenten, sowie Wasserstoff, Methanol, Synthese- und/oder Reformergas, sowie Erdgas.

Die Art des Kühlmediums richtet sich wieder nach der Art der eingesetzten Brennstoffzelle, wobei beispielhaft für die bevorzugt eingesetzten PEM-Brennstoffzellen-Blocks deionisiertes Wasser oder ein anderes, elektrisch nicht leitendes Medium, z.B. Äthylenglykol, Luft oder irgendein Gas, genannt seien. Auch eine heat-pipe Kühlung ist möglich, wobei der Wärmeaustauscher der Kondensator für das heat-pipe Medium ist. Mit heat-pipe Kühlung ist gemeint, daß das zu kühlende Teil durch einen dreidimensionalen Kanal ("pipe") mit einem kühleren Teil verbunden ist, wobei bei dem zu kühlenden Teil die in der Pipe enthaltene Flüssigkeit verdampft und beim kühleren, zweiten Teil wieder auskondensiert.

Als "Anodenabgas" wird das Abgas bezeichnet, das den Anodenraum der Brennstoffzelle verläßt, also das Abgas des Brennstoffs der Brennstoffzelle. Ebenso wird als "Kathodenabgas" das Abgas bezeichnet, das den Kathodenraum der Brennstoffzelle verläßt, also das Abgas des Oxydans.

Bevorzugt wird das Verfahren bei stationären Energieversorgungssystemen eingesetzt, jedoch ist eine Anwendung auch in mobilen Energieversorgungssystemen nicht auszuschließen. Bei den stationären Energieversorgungssystemen handelt es sich dabei nicht nur um Großanlagen, sondern es können auch einzelne Häuser oder Wohnanlagen mit einem Energieversorgungssystem, das mit einem erfindungsgemäßen Verfahren betrieben wird, ausgestattet sein. Das Energieversorgungssystem umfaßt eine Strom-und Wärmeversorgung, wobei die Wärme zum Zwecke der Raumheizung und/oder der Warm-oder Heißwasserbereitung genutzt werden kann. Die elektrische Energie kann in einem E-Speicher, z.B. Batterie oder Schwungrad, die thermische Energie in einem Wärmespeicher genutzt werden. Generell läßt sich das erfindungsgemäße Prinzip in allen möglichen Dimensionen realisieren, wobei die Anwendung bei stationären Heizsystemen, wie z.B. in Wohnanlagen, bei der Entwicklung der Erfindung im Vordergrund stand. Die Begriffe "Brennstoffzellenmodul" und "-anlage" sind entsprechend auch nicht dimensionsmäßg festzulegen, weil sie je nach Einsatzgebiet drastisch variieren können.

Der erfindungsgemäße Wärmetauscher für das Abgas, der auch ein Energiewandler sein kann, nutzt die Energie des Abgases, die erstens frei wird, wenn das Gas auf eine geringere Temperatur gebracht wird und die zweitens als Kondensationsenergie bei der Verflüssigung des Dampfes frei wird. Die Energie der anziehenden Molekularkräfte, also die Kondensationsenergie, macht dabei den weitaus größeren Anteil aus. Diese Energie ist gleich der spezifischen Verdampfungsenergie der Flüssigkeit. Bei Wasser hat sie einen besonders hohen Wert, nämlich 4,06 x 10⁷J/mol oder 2,25 × 10⁶ J/kg. Erfindungsgemäß wird diese Energie über ein im Anschluß an die Brennstoffzelle befindliches Aggregat genutzt.

Bei dem bevorzugt eingesetzten PEM-Brennstoffzellenmodul bildet sich das Produktwasser auf der Kathodenseite, auf der das Oxidans strömt. Zwar wird entsprechend bevorzugt das mit Dampf gesättigte Kathodenabgas in den Wärmeaustauscher eingeleitet, wegen der starken Konzentrationsunterschiede an Wasser innerhalb jeder einzelnen Brennstoffzelle ist aber immer auch infolge Diffusion Produktwasser auf Anodenseite zu finden, und auch das Anodenabgas kann gewinnbringend in einen Wärmeaustauscher eingeleitet werden.

Desweiteren kann das in dem Wärmeaustauscher oder Kondensator angefallene Produktwasser nicht nur weiterverwendet und insbesondere zur Befeuchtung der Reaktanden oder der Membran eingesetzt werden, es wird auch gleichzeitig noch die, nach Auskondensation des Produkts im "zweiten Abgas" verbliebene Enthalpie freigesetzt. Im Unterschied zu dem Abgas, das die Brennstoffzelle verläßt wird hier als "zweites Abgas" das Abgas bezeichnet, das den Wärmeaustauscher, Energiewandler oder Kondensator verläßt und kälter ist. Trotzdem verfügt auch dieses zweite Abgas noch über ungenutzte Energie und Enthalpie, die gewinnbringend genutzt werden kann. Insbesondere das zweite Abgas, zur Erwärmung direkt in die Raumluft eingespeist. Daneben kann es auch teilweise in die Raumluft eingespeist werden und teilweise einem weiteren Energiewandler oder Wärmetauscher unterworfen werden.

"Kondensator" wird hier in dem üblichen Sinn gebraucht, als allgemein übliches Synonym für einen Kondensations-Wärmetauscher. Unter "Reformer" wird ein H₂-Erzeuger aus Kohlenwasserstoff-Verbindungen (z.B. Erdgas oder Methanol) verstanden.

Die vorstehenden Definitionen gelten für die Ansprüche, die Beschreibung und die Erläuterungen zu den Figuren. Im weiteren soll die Erfindung nun anhand eines Beispiels, das die Hausenergieversorgung mit PEM-Brennstoffzellen unter Einsatz des erfindungsgemäßen Verfahrens zeigt, erläutert werden:

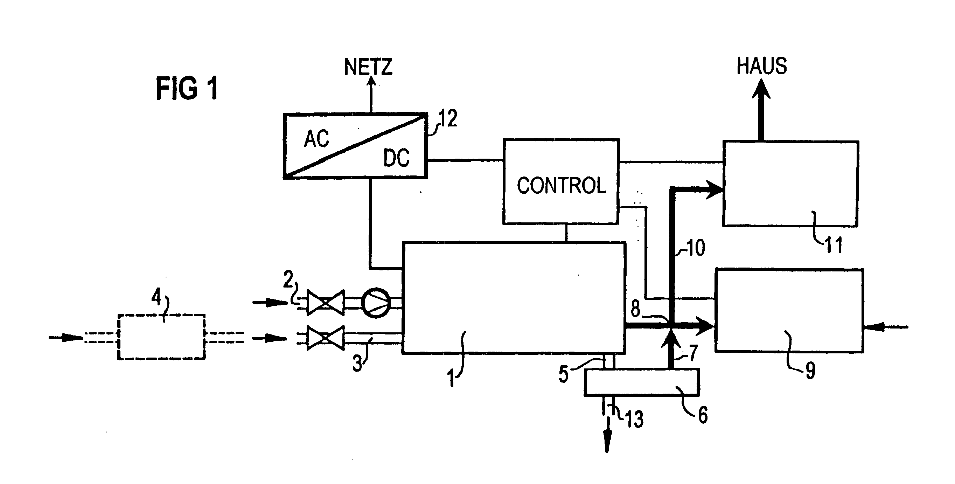

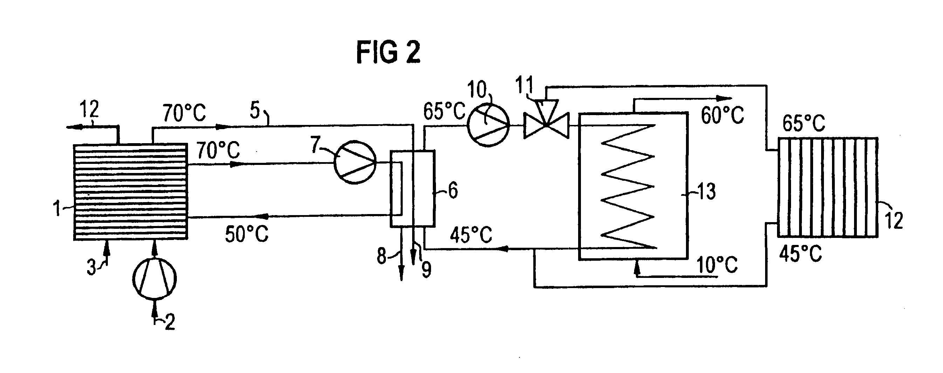

Figuren 1 und 2 zeigen die Systemtechnik stationärer Anwendungen des erfindungsgemäßen Verfahrens.

In Fig. 1 ist das Blockschaltbild der Anlage zu sehen. In der Mitte des Bildes befindet sich das Brennstoffzelienmodul 1, mit den beiden Zuleitungen 2 und 3. Über die Zuleitung 2 wird das Oxydans (Luft) dem Brennstoffzellenmodul 1 zugeführt und über die Zuleitung 3 kommt der Brennstoff(H₂). Bei dem Oxydans kann es sich dabei außer um Luft, um Sauerstoff oder beliebige Mischungen aus den beiden handeln, sowie bei dem Brennstoff um Wasserstoff, Methanol, Synthese- und/oder Reformergas, sowie Erdgas. Im Falle von Reformergas oder Methanol kann der Zuleitung 3 noch ein Reformer 4 vorgeschaltet sein. Über die Ableitung 5 verläßt das Abgas das Brennstoffzellenmodul und erreicht den Kondensator 6. Im Kondensator wird das Abgas abgekühlt und das Produktwasser auskondensiert. Die Zuleitung 7 befördert das über den Kondensator 6 erwärmte Wasser einmal über die Anschlußstelle 8 zum Warmwasserspeicher 9 und andererseits über die Zuleitung 10 zum Wärmetauscher 11, der direkt an den Haushalt angeschlossen ist. Auf der anderen Seite des Kondensators 6, bei der Ableitung 13 verläßt die "zweite Abluft" und das auskondensierte Produktwasser den Kondensator 6. Links vom Brennstoffzellenmodul 1 wird die erzeugte Elektrizität zum Stromwandler 12 geleitet, der den von dem Brennstoffzellenmodul erzeugten Gleichstrom in Wechselstrom umwandelt. Der Wechselstrom kann dann einerseits in den Haushalt, andererseits in das öffentliche Netz eingespeist werden.

Figur 2 zeigt ein weiteres Schaltbild der Hausenergieversorgung mit PEM-Brennstoffzellen unter Wärmeauskopplung bei Wasserstoff-/Luft-Betrieb. Ganz links im Bild ist das Brennstoffzellenmodul 1 zu sehen, das über zwei Zuleitungen 2 und 3 mit Wasserstoff und Luft versorgt wird. Rechts im Anschluß an das Brennstoffzellenmodul befindet sich der Kühlkreislauf, in dem das Kühlmedium im Kreis zwischen dem Wärmeaustauscher des Aggregats 6 und dem Brennstoffzellenmodul 1 gefahren wird. Das Kühlmedium fließt bei einer Temperatur von z.B. 50°C in das Brennstoffzellenmodul hinein und verläßt ihn mit einer Temperatur von z.B. 70°C. Über eine Pumpe 7 gelangt der etwa 70°C heiße Abfluß, in das Aggregat 6 und dort in den Wärmetauscher, der an einen Heizkreislauf angeschlossen ist und in dem es unter Abkühlung auf ca. 50°C Wärmeenergie abgibt. Mit dieser Temperatur ist das Kühlmittel wieder regeneriert und kann in das Brennstoffzellenmodul eingeleitet werden.

Über die Leitung 5 gelangt die mit Wasserdampf gesättigte oder zumindest angereicherte Abluft aus dem Brennstoffzellenmodul 1 zu dem Aggregat 6, das außer dem Wärmeaustauscher noch einem Kondensator integriert hat. Im Kondensator des Aggregats 6 wird der in der Abluft enthaltene Wasserdampf zu Wasser kondensiert, das als Nutzwasser über den Ausgang 8 das Aggregat 6 verläßt. Die freiwerdende Kondensationswärme und die Wärme der Abluft, sowie die Wärme des Kühlmediums werden dazu benutzt, den an das Wärmeaustauscher- und Kondensatoraggregat 6 angeschlossenen Heizkreislauf mit Wärmeenergie zu versorgen. Das im Heizkreislauf im Kreis gefahrene Heizmedium tritt beispielsweise in das Aggregat 6 mit einer Temperatur von z.B. 45°C ein und verläßt das Aggregat unter Erwärmung um ca. 20°C mit z.B. 65°C wieder. Dann gelangt es über eine Pumpe 10 zu einem Verteiler 11, über den es teilweise in die Heizkörper 12 und teilweise in den Warmwasserspeicher 13 geführt wird. Der Warmwasserspeicher wird mit 10°C warmem Leitungswasser gespeist und kann das Leitungswasser in diesem System bis auf ca. 60°C erwärmen. Auf der anderen Seite des Brennstoffzellenmoduls 1 wird Strom, der wiederum durch einen Gleichstrom-/Wechselstrom-Wandler geleitet wird, für die Elektrizitätsversorgung des Hauses gewonnen (Leitung 12).

Das erfindungsgemäße System kann sowohl Elektrizität, wie auch Wärme zu Heizzwecken und zur Warmwasserbereitung zur Verfügung stellen. Der Heizkreislauf kann auch entfallen, dann wird die Wärme allein zur Warmwasserbereitung genutzt.

Die in Figur 2 angegebenen Temperaturen sind bevorzugte Betriebstemperaturen, jedoch arbeitet das System bis zu einer Betriebstemperatur des Brenn-stoffzellenmoduls von ca. 30°C bis 40°C unter Erhöhung des thermischen Wirkungsgrads des Gesamtenergieversorgungssystems. Das aus dem Wärmetauscher und Kondensatoraggregat 6 gewonnene Wasser kann sowohl in ein Brauchwassersystem eingeleitet werden und es kann aber auch zum Teil oder ganz zur Befeuchtung der Membran des Brennstoffzellenmoduls eingesetzt werden. Die aus dem Aggregat 6 über die Leitung 9 austretende Abluft hat einen Restwärmeinhalt, der wiederum entweder direkt zum Beheizen von Räumen oder auch über einen weiteren Wärmeaustauscher genutzt werden kann, letzteres insbesondere, wenn die Anlage die Wärme hauptsächlich zur Warmwasserbereitung nutzt. Die konstruktive Gestaltung des Aggregats 6 kann alle möglichen Formen der Kombination aus Wärmeaustauscher und Kondensator umfassen, wobei der Wirkungsgrad des Gesamtsystems umso höher wird, je niedriger der Energiegehalt der aus dem Aggregat 6 austretenden Abluft ist.

## Patentansprüche

1. Niedertemperatur-Brennstoffzellenanlage mit Kraft-Wärme-Kopplung, bei der das Abgas an einen Wärmetauscher (6), der einen Kondensator umfasst, angeschlossen ist, wobei Leitungen (9, 13) vorgesehen sind, um das zweite Abgas, also das Abgas, das aus dem Wärmetauscher (6) oder dem Kondensator austritt, teilweise oder ganz ins Innere eines zu versorgenden Hause zur weiteren Nutzung von Restwärme zu leiten, wobei das zweite Abgas über die Leitungen (9, 13) direkt in die Raumluft des zu versorgenden Hauses eingespeist wird und/oder wobei das zweite Abgas über die Leitungen (9, 13) in einen weiteren Wärmetauscher eingeleitet wird.

## Claims

1. Low-temperature fuel-cell installation with combined heat and power, wherein the waste gas is connected to a heat exchanger (6) which comprises a condenser, with lines (9, 13) being provided in order to direct the second waste gas, that is, the waste gas that emerges from the heat exchanger (6) or condenser, partly or totally into the interior of a housing that is to be supplied for further utilization of residual heat, the second waste gas being fed via lines (9, 13) directly into the ambient air of the housing to be supplied and/or the second waste gas being introduced via lines (9, 13) into a further heat exchanger.

## Revendications

1. Installation de piles à combustible à basse température à couplage force-chaleur, dans laquelle l'effluent gazeux passe dans un échangeur de chaleur qui comporte un condenseur, des conduits étant prévus pour faire passer en tout ou partie, à l'intérieur d'une maison à alimenter pour utiliser davantage la chaleur résiduelle, le deuxième effluent gazeux, donc l'effluent gazeux, qui sort de l'échangeur de chaleur ou du condenseur, le deuxième effluent gazeux étant envoyé directement par les conduits (9, 13) dans l'air ambiant de la maison à alimenter et/ou le deuxième effluent gazeux étant envoyé par les conduits (9, 13) dans un autre échangeur de chaleur.
